# EUROPÄISCHE PATENTSCHRIFT

(11) **EP 4 078 286 B1**
(45) Veröffentlichungstag und Bekanntmachung des Hinweises auf die Patenterteilung: **13.08.2025**
(21) Anmeldenummer: 20833761.8
(22) Anmeldetag: 15.12.2020
(51) Int. Cl.: G03B 15/02, G03B 15/05, G03B 15/07

(54) **LEUCHTENEINHEIT MIT HMI-BRENNER UND BLITZRÖHRE, BELEUCHTUNGSEINRICHTUNG MIT LEUCHTENEINHEIT UND REFLEKTORANORDNUNG MIT BELEUCHTUNGSEINRICHTUNG**
LIGHTING UNIT COMPRISING AN HMI LAMP AND FLASHTUBES, ILLUMINATING DEVICE COMPRISING A LIGHTING UNIT, AND REFLECTOR ARRANGEMENT COMPRISING AN ILLUMINATING DEVICE
UNITÉ D'ÉCLAIRAGE COMPRENANT UN LAMPE HMI ET DES TUBES-ÉCLAIRS, DISPOSITIF D'ÉCLAIRAGE COMPRENANT UNE UNITÉ D'ÉCLAIRAGE ET AGENCEMENT RÉFLECTEUR COMPRENANT UN DISPOSITIF D'ÉCLAIRAGE

(30) Priorität: 20.12.2019 DE 102019135534
(43) Veröffentlichungstag der Anmeldung: 26.10.2022
(73) Patentinhaber: Briese, Hans-Werner Friedrich, 22303 Hamburg (DE)
(72) Erfinder: Briese, Hans-Werner Friedrich, 22303 Hamburg (DE)
(74) Vertreter: Stork Bamberger Patentanwälte PartmbB
(86) Internationale Anmeldenummer: PCT/EP2020/086127
(87) Internationale Veröffentlichungsnummer: WO 2021/122534

(56) Entgegenhaltungen:
- WO-A2-2008/036978
- DE-A1- 1 952 170
- DE-A1- 3 124 757
- DE-A1- 3 938 228
- DE-B1- 2 606 650
- US-B2- 8 702 255

## Beschreibung

Die Erfindung betrifft eine Leuchteneinheit, ausgebildet und eingerichtet zum Beleuchten von Motiven für Fotoaufnahmen und Filmaufnahmen.

Die Erfindung betrifft des Weiteren eine Beleuchtungseinrichtung, ausgebildet und eingerichtet zum Beleuchten von Motiven für Fotoaufnahmen und Filmaufnahmen.

Die Erfindung betrifft weiterhin eine Reflektoranordnung, ausgebildet und eingerichtet zum Bereitstellen einer Beleuchtung für Fotoaufnahmen und Filmaufnahmen.

Leuchteneinheiten kommen bei Fotoaufnahmen sowie bei Filmaufnahmen zum Einsatz, um das zu fotografierende oder zu filmende Motiv auszuleuchten bzw. zu beleuchten. Unter Motiv wird alles verstanden, was durch ein Foto oder einen Film aufgenommen werden kann, insbesondere jedoch Personen, wie z.B. Portrait oder Sportaufnahmen, und/oder Objekte, wie z.B. Bekleidung, Lebensmittel, und/oder Natur. Mittels der Beleuchtung bzw. Ausleuchtung des Motivs können Charakteristika des Motivs, beispielsweise Konturen, Farbtreue, Schattenbildung etc. beeinflusst, nämlich z.B. reduziert oder hervorgehoben werden. Es gibt hinsichtlich der Auswahl der Leuchtmittel beim Fotografieren unterschiedliche Anforderungen und Notwendigkeiten als beim Filmen. Beim Fotografieren sind Leuchteinheiten im Einsatz, bei denen ein Leuchtmittel, z.B. eine Halogenbirne, ein Halogenstab oder jedes andere auf Halogenbasis funktionierende Leuchtmittel, zur Bereitstellung eines so genannten Einstelllichts ausgebildet und eingerichtet ist. Ein zweites Leuchtmittel ist eine Blitzröhre, mittels der die eigentliche, kurzzeitige (blitzartige) Ausleuchtung des Motivs erzeugt wird. Beim Filmen sind Leuchteinheiten im Einsatz, bei denen zur Bereitstellung eines Dauerlichts durch einen HMI-Brenner als einziges Leuchtmittel eine längere (der Filmsequenz entsprechende), dem Tageslicht nahekommende Ausleuchtung des Motivs erzeugt wird.

Entsprechend sind die bekannten Leuchteinheiten zum einen nur für Fotoaufnahmen, also stehende Bilder, ausgebildet und eingerichtet und weisen entsprechend ein Einstelllicht und mindestens ein Blitzlicht auf, oder nur für Filmaufnahmen, also bewegte Bilder, ausgebildet und eingerichtet und weisen entsprechend einen HMI-Brenner auf. Für das Betreiben der Beleuchtungseinrichtung umfassend eine Leuchteinheit zum Aufnehmen von Fotos ist eine Energiequelle z.B. in Form eines Generators erforderlich, der die Energie für das Einstelllicht und die Zündspulen für jedes Blitzlicht liefert. Für das Betreiben der Beleuchtungseinrichtung umfassend eine Leuchteinheit zum Aufnehmen von Filmen ist eine Energiequelle z.B. in Form eines Generators erforderlich, der die Energie zum Ionisieren der Gasstrecke zwischen den Elektroden des HMI-Brenners und für ein Vorschaltgerät zur Begrenzung der Stromaufnahme des HMI-Brenners nach erfolgter Gasentladung liefert. Einfach ausgedrückt existieren für Fotoaufnahmen und Filmaufnahmen unterschiedliche Ausrüstungssätze von Beleuchtungseinrichtungen.

Das führt dazu, dass am Foto- und Film-Set für den Fall, dass sowohl Foto- als auch Filmaufnahmen gemacht werden sollen, ein erheblicher Umrüstaufwand hinsichtlich der Beleuchtungssituation betrieben werden muss, was zu erheblich höheren Produktionskosten führt, u.a. aufgrund der längeren Mietdauern der Studios. Ein weiterer Nachteil der getrennten Funktionalitäten der bekannten Leuchteinheiten besteht darin, dass jeweils separates Equipment, also z.B. Leuchteinheiten, Generatoren, Vorschaltgeräte, Zündgeräte, Zündspulen und dergleichen notwendig ist, das an die jeweiligen Erfordernisse für Fotoaufnahmen und Filmaufnahmen angepasst ist, was aufgrund der diversen Einzelteile zu einem erhöhten Logistikaufwand bei der Einrichtung des Foto- und Film-Sets und entsprechend auch zu Mehrkosten führt. Zum anderen können die einzelnen Charakteristika der Motive nur teilweise optimal herausgearbeitet werden. Mit anderen Worten stellen die bekannten Leuchteinheiten sowohl für die Fotoaufnahmen als auch für die Filmaufnahmen lediglich einen Kompromiss zu Lasten maximaler Foto- und Filmqualität dar.

Die Leuchteinheiten sind eigenständig z.B. als Austausch - oder Ersatzteil handel- und einsetzbar. Üblicherweise sind die Leuchteneinheiten jedoch Bestandteil einer Beleuchtungseinrichtung, die vorzugsweise wiederum Bestandteil einer Reflektoranordnung ist.

Der Erfindung liegt somit die Aufgabe zugrunde, eine universell für Foto- und Filmaufnahmen einsetzbare, zuverlässige und sichere Leuchteneinheit zu schaffen, die die individuelle Beleuchtungssituation optimiert. Die Aufgabe besteht weiterhin darin, eine entsprechende Beleuchtungseinrichtung sowie eine entsprechende Reflektoranordnung vorzuschlagen.

Diese Aufgabe wird durch eine eingangs genannte Leuchteneinheit gemäß Anspruch 1 gelöst. Die Leuchteneinheit zeichnet sich aus durch einen Anschlusskörper, der einerseits Steckplätze aufweist, die zum Aufnehmen von mindestens zwei Leuchtmitteln ausgebildet und eingerichtet sind, und andererseits Kontakte aufweist, die zum Anschließen an einen Generator ausgebildet und eingerichtet sind, wobei die Kontakte elektrisch mit den Steckplätzen verbunden sind, mindestens zwei in die Steckplätze eingesteckte Leuchtmittel, sowie eine im Wesentlichen transparente Schutzglocke, die mit dem Anschlusskörper verbunden ist und jedes mit dem Anschlusskörper verbundene Leuchtmittel mindestens teilweise umschließt, wobei ein Leuchtmittel als HMI-Brenner und das mindestens eine weitere Leuchtmittel als Blitzröhre ausgebildet ist. Der Anschlusskörper bildet eine plattenartige Basis der Leuchteneinheit, wobei der Anschlusskörper selbst nicht elektrisch leitend ist, sondern auf einer Seite Steckplätze aufweist, in die die Leuchtmittel eingesteckt, eingeschraubt oder anderweitig vorzugsweise lösbar eingesetzt sind, und auf der gegenüberliegenden Seite elektrisch leitende Anschlusspole, also die Kontakte aufweist, die elektrisch mit den Steckplätzen verbunden sind. Sämtliche Leuchtmittel sind mit Ausnahme von Lüftungsöffnungen zum Wärmeabfluss vollständig von der Schutzglocke umgeben. Mit der erfindungsgemäßen Leuchteneinheit mit einem HMI-Brenner und mindestens einer Blitzröhre ist erstmalig eine Art Kombileuchte bereitgestellt, die ohne Umbaumaßnahmen sowohl für Fotoaufnahmen als auch für Filmaufnahmen einsetzbar ist. Durch gezieltes Ansteuern/Auslösen des HMI-Brenners und/oder der Blitzröhre kann mit demselben Equipment Dauerlicht für Filmaufnahmen und Einstell- und/oder Blitzlicht für Fotoaufnahmen bereitgestellt werden. Die Kombination der verschiedenen Leuchtmittel in einer Leuchteneinheit bietet die Möglichkeit, neue bzw. besonders hervorgehobene Charakteristika für die Foto- und Filmaufnahmen, zu erzielen, die die Fotos und Filme "lebendiger" erscheinen lassen. Insbesondere wird mit der erfindungsgemäßen Leuchteneinheit eine besonders hohe Farbtreue erreicht, die die Aufnahmen besonders realitätsnah erscheinen lassen.

Vorteilhafterweise sind dem HMI-Brenner ein Zündgerät sowie ein Vorschaltgerät zugeordnet und der Blitzröhre ist eine Zündspule zugeordnet. Das Zündgerät für den HMI-Brenner kann als separate Komponente außerhalb der Leuchteneinheit platziert sein, vorzugsweise mit geringem Abstand kleiner als z.B. 1m. Optional kann das Zündgerät aber auch integraler Bestandteil der Leuchteneinheit sein. Entsprechendes gilt für das Vorschaltgerät, das integraler Bestandteil der Leuchteneinheit sein kann, vorzugsweise aber separat zur Leuchteneinheit ausgebildet ist und insbesondere in einem (weiter unten beschriebenen) Generator angeordnet ist, der für die Energiezufuhr zur Leuchteneinheit ausgebildet und eingerichtet ist. Die Zündspule für die Blitzröhre kann ebenfalls sowohl separat zur Leuchteneinheit angeordnet sein als auch - bevorzugt - integraler Bestandteil derselben sein.

In einer erfindungsgemässen Leuchteneinheit sind zusätzlich zum HMI-Brenner mindestens zwei Blitzröhren innerhalb der Schutzglocke angeordnet und elektrisch mit den Kontakten verbunden in den Anschlusskörper eingesteckt, wobei jeder Blitzröhre eine Zündspule zugeordnet ist. Möglich ist eine gemeinsame Zündspule für beide Blitzröhren. Bevorzugt ist jeder Blitzröhre eine separate Zündspule zugeordnet. Entsprechendes gilt auch dann, wenn mehr als zwei Blitzröhren vorgesehen sind. Insbesondere können vier Blitzröhren vorgesehen sein.

Eine besonders bevorzugte Ausführungsform der Leuchteneinheit ist dadurch gekennzeichnet, dass der HMI-Brenner zentral innerhalb der Schutzglocke und die mindestens zwei Blitzröhren symmetrisch zum HMI-Brenner angeordnet sind. Beispielsweise können auch vier Blitzröhren gleichmäßig über den Umfang des HMI-Brenners herum verteilt angeordnet sein. Genauer sind die Blitzröhren ungleichmäßig oder bevorzugt gleichmäßig um einen Glaskolben des HMI-Brenners herum verteilt und positioniert.

Zweckmäßigerweise ist die Schutzglocke lösbar am Anschlusskörper befestigt und zylinderförmig ausgebildet, wobei an einer Stirnseite der Schutzglocke der Anschlusskörper angeordnet ist und an der dem Anschlusskörper gegenüberliegenden Stirnseite eine luftdurchlässig ausgebildete Schutzkappe angeordnet ist. Beispielsweise kann die zylinderförmige Schutzglocke mittels einer Arretierungsschraube am Anschlusskörper befestigt sein. Durch die Lösbarkeit lassen sich Leuchtmittel schnell und einfach wechseln. Der Anschlusskörper schließt die zylinderförmige Schutzglocke zu einer Stirnseite hin ab. Die luftdurchlässige Schutzkappe am gegenüberliegenden Ende der zylinderförmigen Schutzglocke kann z.B. ein Drahtgitter oder dergleichen sein, das zum einen einen Wärmeabfluss aus dem die Leuchtmittel umschließenden Aufnahmeraum der Schutzglocke ermöglicht und zum anderen als Splitterschutz z.B. gegen zersplitternde Leuchtmittel dient.

Vorzugsweise ist die Schutzglocke aus Glas hergestellt, wobei das Glas mindestens teilweise mit einem UV-Filter versehen ist. Letztlich ist die Schutzglocke vorzugsweise ein zu beiden Stirnseiten offener Glaszylinder. Anstelle von Glas können auch andere geeignete und entsprechend wärmebeständige Materialien eingesetzt werden. Mittels des UV-Schutzes, der sich über die gesamte Oberfläche des Glaszylinders oder Teile davon erstrecken kann, so dass der Glaszylinder mindestens abschnittsweise als UV-Schutzscheibe ausgebildet ist, wird ein wirksamer und notwendiger Schutz gegen das von dem HMI-Brenner emittierte UV-Licht geschaffen.

Vorzugsweise weisen alle Leuchtmittel eine ähnliche Farbtemperatur von etwa 5600 Kelvin mit variablem Spektrum auf. Andere Farbtemperaturbereiche sind aber ebenfalls nahezu beliebig möglich, wobei für die Foto- und Filmaufnahmen bevorzugt ein Farbtemperaturbereich von 5200 bis 6200 ausgewählt wird. Entscheidend ist, dass die Leuchtmittel, im vorliegenden Fall also der HMI-Brenner und die Blitzröhren, in der Größenordnung dieselbe Farbtemperatur aufweisen.

Besonders vorteilhaft ist der Anschlusskörper auf der den Leuchtmitteln abgewandten Seite 18-polig ausgebildet. Damit wird eine Vielzahl von Kontaktierungsmöglichkeiten zur Verfügung gestellt. Anschlusskörper mit einer anderen Anzahl von Kontakten und deren Anordnung zueinander sind aber ebenfalls einsetzbar, wobei die Anzahl und Positionierung auch von der Anzahl der Leuchtmittel und deren Positionierung im Anschlusskörper abhängt.

Die Aufgabe wird auch durch eine Beleuchtungseinrichtung gemäß Anspruch 8 gelöst. Die Beleuchtungseinrichtung zeichnet sich aus durch eine Leuchteneinheit nach einem oder mehreren der Ansprüche 1 bis 7 sowie eine gemeinsame Energiequelle, die zum wahlweisen Betreiben und/oder Zünden von HMI-Brenner und/oder Blitzröhren ausgebildet und eingerichtet ist. Die sich daraus ergebenden Vorteile wurden bereits im Zusammenhang mit der Leuchteneinheit beschrieben, weshalb zur Vermeidung von Wiederholungen auf die entsprechenden Passagen verwiesen wird. Durch die erfindungsgemäße Ausbildung der Beleuchtungseinrichtung existiert ein einziger Ausrüstungssatz für Fotoaufnahmen und Filmaufnahmen, so dass der Umrüstaufwand entfällt und die Teilevielfalt reduziert ist. Anders ausgedrückt wird durch einen einzigen Ausrüstungssatz effektiv Zeit und Platz eingespart und die Teilelogistik vereinfacht sich relevant, was im Ergebnis zu einer signifikanten Kostenreduzierung beiträgt.

Vorzugsweise ist die Energiequelle ein Generator, der ein Vorschaltgerät umfasst, das zur Begrenzung der Stromaufnahme des HMI-Brenners ausgebildet und eingerichtet ist. Der Generator weist mehreren Anschlussbuchsen auf, um die Leuchtmittel der Leuchteneinheit über Leitungskabel mit dem Generator verbinden zu können. Das Vorschaltgerät für den HMI-Brenner kann optional auch separat außerhalb des Generators ausgebildet und angeordnet sein.

Die Beleuchtungseinrichtung umfasst bevorzugt weiterhin eine Steuerungseinrichtung, die zum individuellen Ansteuern der Leuchtmittel der Leuchteneinheit ausgebildet und eingerichtet ist. Mittels der Steuerungseinrichtung kann individuell ausgewählt werden, ob nur der HMI-Brenner oder nur eine Blitzröhre oder beide Blitzröhren oder der HMI-Brenner und eine oder zwei Blitzröhren angesteuert und ausgelöst werden, um für jeden Anwendungsfall die optimale Beleuchtung bereitstellen zu können. Die Steuerungseinrichtung kann separat zum Generator ausgebildet oder integraler Bestandteil desselben sein.

Besonders bevorzugt umfasst der Generator eine Detektionseinrichtung, die zum Erkennen der angeschlossenen Leuchtmittel der Leuchteinheit ausgebildet und eingerichtet ist. Diese Detektionseinrichtung kann mechanisch und/oder elektronisch ausgebildet sein. Vorzugsweise ist die Detektionseinrichtung mit der Steuerungseinrichtung verbunden, um die von der Detektionseinrichtung abgegebenen Signale aufnehmen und verarbeiten zu können.

In einer weiteren vorteilhaften Ausführungsform ist der Generator zum Erzeugen kurzer Abbrennzeiten der Blitzröhren ausgebildet und eingerichtet, derart, dass mit jeder Blitzröhre Blitze zum Aufnehmen von 60 bis 120 Bildern pro Sekunde erzeugbar sind. Mit dieser Ausbildung ist es erstmals möglich, Filmaufnahmen alleine mit Blitzlicht auszuführen, so dass die vielen Einzelbilder mit extrem hoher Schärfe zu einem qualitativ hochwertigen Film zusammengefügt werden können.

Die Aufgabe wird auch durch eine eingangs genannte Reflektoranordnung gelöst, die gekennzeichnet ist durch einen Reflektorschirm, eine Beleuchtungseinrichtung nach einem oder mehreren der Ansprüche 9 bis 13, sowie ein Trägerelement zur Aufnahme mindestens von Teilen der Beleuchtungseinrichtung. Die sich aus der Leuchteneinheit ergebenden Vorteile wurden bereits im Zusammenhang mit der Leuchteneinheit beschrieben, weshalb zur Vermeidung von Wiederholungen auf die entsprechenden Passagen verwiesen wird. In Kombination mit der Beleuchtungseinrichtung und dem Reflektorschirm kommen die genannten Vorteile besonders zum Tragen.

Vorzugsweise ist die Leuchteneinheit an einem freien Ende des Trägerelementes angeordnet, wobei das Trägerelement als Fokussiereinheit für die Leuchteneinheit axial in Längsrichtung der Mittelachse der Fokussiereinheit bzw. des Reflektorschirms relativ zu diesem verschiebbar ist. Damit lassen sich die Beleuchtungseffekte und Charakteristika, die die Leuchteneinheit ermöglicht, besonders vorteilhaft nutzen.

Weitere zweckmäßige und/oder vorteilhafte Merkmale und Weiterbildungen zur Leuchteneinheit, Beleuchtungseinrichtung und Reflektoranordnung ergeben sich aus den Unteransprüchen und der Beschreibung. Besonders bevorzugte Ausführungsformen werden anhand der beigefügten Zeichnung näher erläutert. In der Zeichnung zeigt:

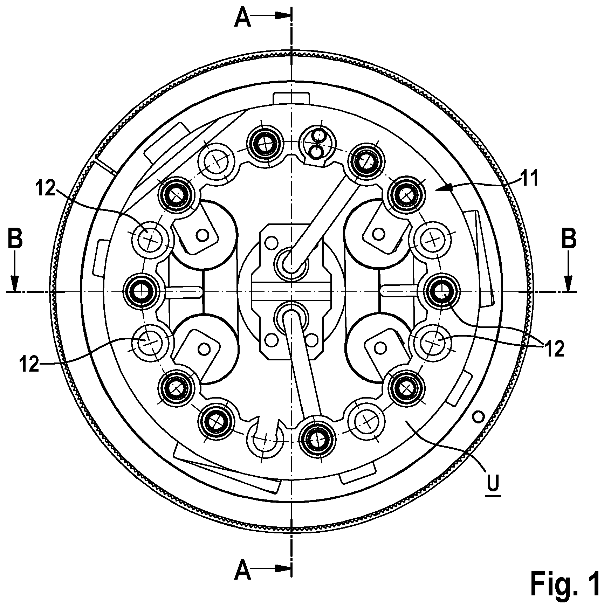

- Fig. 1: eine erfindungsgemäß Leuchteneinheit in einer Ansicht von unten auf die Kontakte des Anschlusskörpers,
- Fig. 2: die Leuchteneinheit gemäß Figur 1 in einer Ansicht entlang Schnitt B-B,
- Fig. 3: die Leuchteneinheit gemäß Figur 1 in einer Ansicht entlang Schnitt A-A, und
- Fig. 4: eine Reflektoranordnung mit teilweise ausgeschnittenem Reflektorschirm.

Die in der Zeichnung dargestellte Leuchteneinheit 10 sowie die dargestellte Beleuchtungseinrichtung 30 und die dargestellte Reflektoranordnung 40 sind zum Beleuchten/Ausleuchten von Motiven aller Art für Fotoaufnahmen und Filmaufnahmen ausgebildet und eingerichtet.

Die Leuchteneinheit 10 ist erfindungsgemäß gekennzeichnet durch einen Anschlusskörper 11, der einerseits Steckplätze aufweist, die zum Aufnehmen von mindestens zwei Leuchtmitteln ausgebildet und eingerichtet sind, und andererseits Kontakte 12 aufweist, die zum Anschließen an einen Generator 13 ausgebildet und eingerichtet sind, wobei die Kontakte 12 elektrisch mit den Steckplätzen verbunden sind, mindestens zwei in die Steckplätze eingesteckte Leuchtmittel, sowie eine im Wesentlichen transparente Schutzglocke 14, die mit dem Anschlusskörper 11 verbunden ist und jedes mit dem Anschlusskörper 11 verbundene Leuchtmittel mindestens teilweise umschließt, wobei ein Leuchtmittel als HMI-Brenner 15 und das mindestens eine weitere Leuchtmittel als Blitzröhre 16 ausgebildet ist.

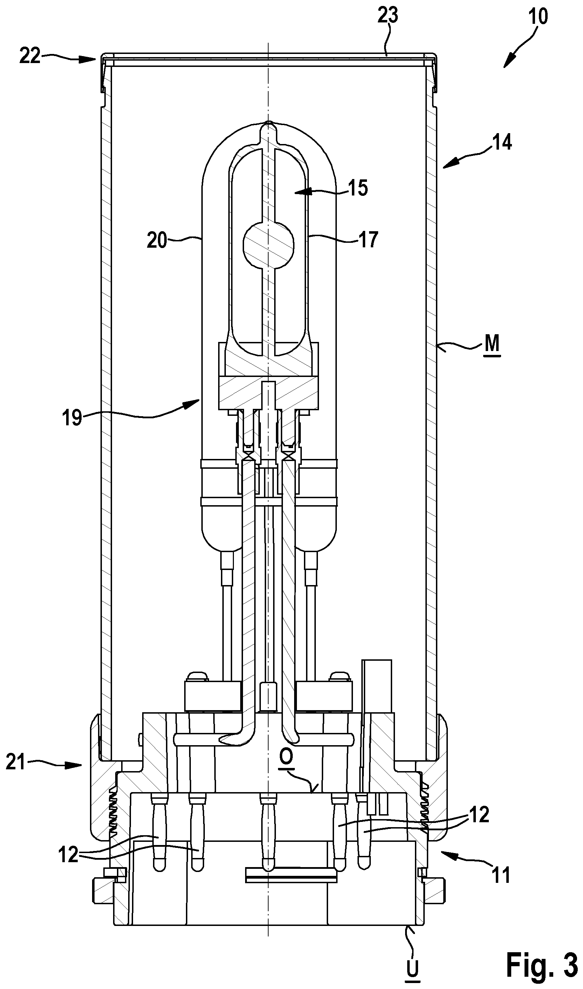

Die Kontakte 12 gehen üblicherweise nicht direkt an bzw. in den Generator 13 (hierzu weiter unten). Die Steckplätze sind auf einer der Schutzglocke 14 zugewandten Oberseite O des Anschlusskörpers 11 ausgebildet. Die Steckplätze können zur Steckverbindung, Schraubverbindung, Rastverbindung oder jeder anderen Art der lösbaren Verbindung ausgebildet sein. Die Kontakte 12 bzw. Anschlusspole sind auf der Unterseite U des Anschlusskörpers 11 ausgebildet. Vorzugsweise sind der HMI-Brenner 15 und die oder jede Blitzröhre 16 auf einer Höhe angeordnet. Das bedeutet, dass sie in Seitenansicht (siehe z.B. Figur 3) hintereinander angeordnet sind.

Der HMI-Brenner 15 weist einen mit Gas gefüllten Glaskolben 18 auf, wobei das Gas in kaltem Zustand als Isolator zwischen zwei Elektroden dient. Mittels einer Hochspannungsentladung durch den Generator 13 wird die isolierende Gasstrecke zwischen den Elektroden leitend gemacht. Durch den zwischen den Elektroden gebildeten Lichtbogen wird Licht emittiert. Nach der erfolgten Gasentladung ist das Gas leitend, so dass Strom durch das Gas fließt. Mittels eines Vorschaltgerätes erfolgt eine Strombegrenzung. Als Blitzröhre 16 können bevorzugt Xenon-Blitzröhren oder Krypton-Blitzröhren sowie andere gängige Blitzlichter bzw. Blitzröhren zum Einsatz kommen. Jede Blitzröhre 16 umfasst ebenfalls einen Glaskolben 18, der mit einem Gas gefüllt ist sowie zwei Elektroden. Durch das Anlegen einer ausreichend hohen Spannung findet eine Gasentladung bzw. das Ausbilden eines Funkens statt, der den Lichtblitz darstellt. Die notwendige Energie wird vom Generator 13 bereitgestellt.

Wie erwähnt, ist für den Betrieb des HMI-Brenners 15 ein Vorschaltgerät notwendig. Vorzugsweise sind dem HMI-Brenner 15 ein Zündgerät sowie ein Vorschaltgerät zugeordnet. Sowohl das Zündgerät als auch das Vorschaltgerät können separat zur Leuchteneinheit 10 ausgebildet und angeordnet sein. Vorzugsweise ist jedoch mindestens das Zündgerät integraler Bestandteil der Leuchteneinheit 10 und im Bereich des Anschlusskörpers 11 angeordnet. Der Blitzröhre 16 ist eine Zündspule zugeordnet. Die Zündspule kann ebenfalls integraler Bestandteil der Leuchteneinheit 10 sein und ist dann zweckmäßigerweise im Bereich des Anschlusskörpers 11 angeordnet. Bevorzugt ist die oder jede Zündspule außerhalb der Leuchteneinheit 10 angeordnet (hierzu weiter unten).

Es sind zusätzlich zum HMI-Brenner 15 mindestens zwei Blitzröhren 16, 19 innerhalb der Schutzglocke 14 angeordnet und elektrisch mit den Kontakten 12 verbunden in den Anschlusskörper 11 eingesteckt, wobei jeder Blitzröhre 16, 19 eine Zündspule zugeordnet ist. Es kann jeder Blitzröhre 16, 19 eine eigene Zündspule zugeordnet sein. Möglich ist auch eine gemeinsame Zündspule für alle Blitzröhren 16, 19. Die zweite Blitzröhre 19 ist vorzugsweise identisch zur ersten Blitzröhre 16 ausgebildet und umfasst ebenfalls einen mit Gas gefüllten Glaskolben 20 sowie zwei Elektroden. Es ist aber auch möglich, unterschiedliche Blitzröhren 16, 19 in einer Leuchteneinheit 10 zu integrieren. Die Anordnung und Positionierung der Blitzröhren 16, 19 innerhalb der Schutzglocke 14 zum HMI-Brenner 15 ist variabel. Besonders bevorzugt ist der HMI-Brenner 15 zentral innerhalb der Schutzglocke 14 angeordnet und die zwei Blitzröhren 16, 19 sind symmetrisch zum HMI-Brenner 15 angeordnet. Mit anderen Worten sind die beiden Blitzröhren 16, 19 um etwa 180° versetzt um den HMI-Brenner 15 bzw. dessen Glaskolben 17 herum angeordnet. In anderen Ausführungsformen mit z.B. vier Blitzröhren sind diese vorzugsweise gleichmäßig um 90° versetzt zueinander um den HMI-Brenner 15 bzw. dessen Glaskolben 17 herum angeordnet.

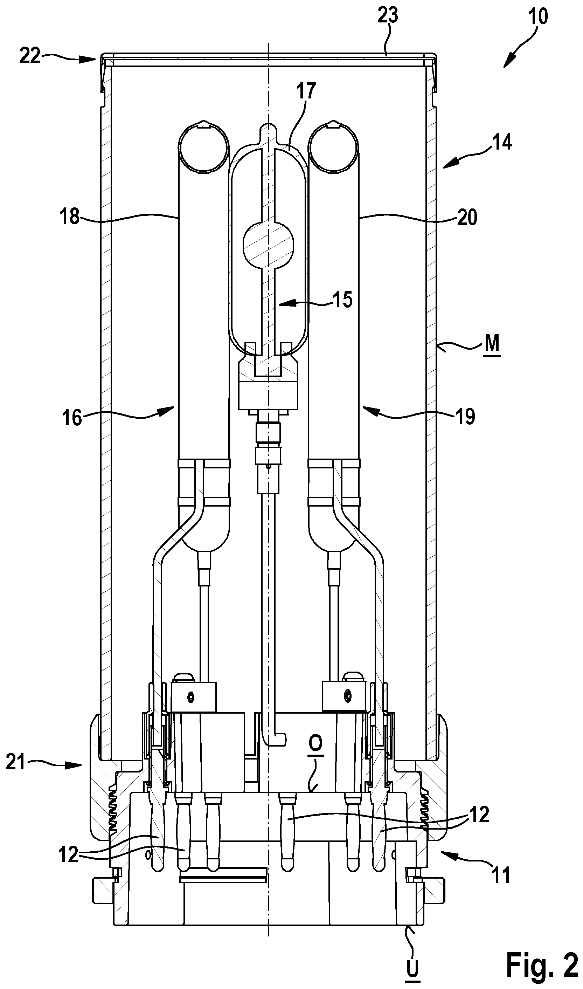

Die Schutzglocke 14 ist lösbar am Anschlusskörper 11 befestigt und zylinderförmig ausgebildet, wobei an einer Stirnseite 21 der Schutzglocke 14 der Anschlusskörper 11 angeordnet ist und an der dem Anschlusskörper 11 gegenüberliegenden Stirnseite 22 eine luftdurchlässig ausgebildete Schutzkappe 23 angeordnet ist. Die Schutzkappe 23 ist in einfachen Ausführungen mit mindestens einer Arretierungsschraube mit dem Anschlusskörper 11 verbunden. Die Schutzkappe 14 kann aber auch in einer Fassung sitzen, die mit dem Anschlusskörper 11 verschraubt ist. Andere Befestigungsmöglichkeiten der Schutzglocke 14 mit bzw. an dem Anschlusskörper 11 sind aber ebenfalls einsetzbar. Die Schutzkappe 23 kann ein einfaches Drahtgitter sein, das luftdurchlässig ist. Andere Deckelelemente mit Öffnungen, Schlitzen oder anderen luftdurchlässigen Ausnehmungen sind ebenfalls einsetzbar. Integral zur Schutzkappe 23 oder separat dazu können im Bereich der Stirnseite 22 der Schutzglocke 14 auch Lichtfilter angeordnet sein. In Richtung der Stirnseite 22 enden der HMI-Brenner 15 und die oder jede Blitzröhre 16, 19 etwa auf einer Höhe (siehe z.B. Figuren 2 und 3).

Die Schutzglocke 14 ist vorzugsweise aus Glas hergestellt, wobei das Glas mindestens teilweise mit einem UV-Filter versehen ist. Der UV-Filter kann in das Glas integriert sein. Der UV-Filter kann aber auch separat von innen und/oder außen an der Schutzglocke 14 angebracht sein. Vorzugsweise hat die Schutzglocke 14 eine geschlossene Mantelfläche M. Die Mantelfläche M kann in anderen Beispielen aber auch Lüftungsöffnungen oder dergleichen aufweisen.

Alle Leuchtmittel, also der HMI-Brenner 15 und jede Blitzröhre 16, 19, weisen eine ähnliche Farbtemperatur von etwa 5600 Kelvin mit variablem Spektrum auf. In anderen Beispielen und abhängig vom Anwendungsfalls können jedoch auch Leuchtmittel mit Farbtemperaturen kleiner oder größer 5600 Kelvin eingesetzt werden. Auch können Leuchtmittel in einer Leuchteneinheit 10 mit unterschiedlichen Farbtemperaturen eingesetzt werden. Der Anschlusskörper 11 kann eine unterschiedliche Anzahl von Kontakten 12 aufweisen. Vorzugsweise ist der Anschlusskörper 11 auf der den Leuchtmitteln abgewandten Unterseite U 18-polig ausgebildet.

Die Leuchteneinheit 10 als Leuchtenkörper ist eine eigenständige Komponente und als solche separat einsetzbar. Vorzugsweise ist die Leuchteneinheit 10 jedoch Bestandteil der Beleuchtungseinrichtung 30. Die Beleuchtungseinrichtung 30, ausgebildet und eingerichtet zum Beleuchten von Motiven für Fotoaufnahmen und Filmaufnahmen, ist gekennzeichnet durch eine Leuchteneinheit 10 nach einem oder mehreren der Ansprüche 1 bis 8 sowie eine gemeinsame Energiequelle, die zum wahlweisen Betreiben und/oder Zünden von HMI-Brenner 15 und/oder Blitzröhren 16, 19 ausgebildet und eingerichtet ist. Die Energiequelle ist der Generator 13, der ein Vorschaltgerät umfasst, das zur Begrenzung der Stromaufnahme des HMI-Brenners 15 ausgebildet und eingerichtet ist. Wie bereits beschrieben, kann das Vorschaltgerät der Leuchteneinheit 10 zugeordnet sein. Optional ist das Vorschaltgerät eine eigenständige Komponente. Bevorzugt ist das Vorschaltgerät jedoch integraler Bestandteil des Generators 13. Der HMI-Brenner 15 ist in einem Bereich vorzugsweise von 125 bis 400 W über den Generator 13 einstellbar, so dass der HMI-Brenner 15 auch als Einstelllicht für Blitzfotoaufnahmen einsetzbar ist.

Die Leuchteneinheit 10 weist Anschlussstecker 31, 32 auf, die mit den Kontakten 12 in elektrischer Verbindung stehen. Die Anschlussstecker 31, 32 können direkt oder über Leitungskabel 33, 34 mit Anschlussbuchsen 35, 36 des Generators 13 verbunden sein.

Die Beleuchtungseinrichtung 30 umfasst weiterhin eine Steuerungseinrichtung, die zum individuellen Ansteuern der Leuchtmittel der Leuchteneinheit 10 ausgebildet und eingerichtet ist. Die Steuerungseinrichtung kann separat ausgebildet sein, ist bevorzugt aber integraler Bestandteil des Generators 13. Des Weiteren umfasst die Beleuchtungseinrichtung 30 bzw. der Generator 13 eine Detektionseinrichtung, die zum Erkennen der angeschlossenen Leuchtmittel der Leuchteinheit 10 ausgebildet und eingerichtet ist. Die Detektionseinrichtung ist bevorzugt mit der Steuerungseinrichtung verbunden. Der Generator 13 kann weitere Anschlussbuchsen zum Anschließen weiterer Komponenten aufweisen.

Der Generator 13 ist insbesondere zum Erzeugen kurzer Abbrennzeiten der Blitzröhren 16, 19 ausgebildet und eingerichtet, derart, dass mit jeder Blitzröhre 16, 19 Blitze zum Aufnehmen von 60 bis 120 Bildern pro Sekunde erzeugbar sind. Letztlich sind also mittels des Generators 13 entsprechend viele Blitze erzeugbar.

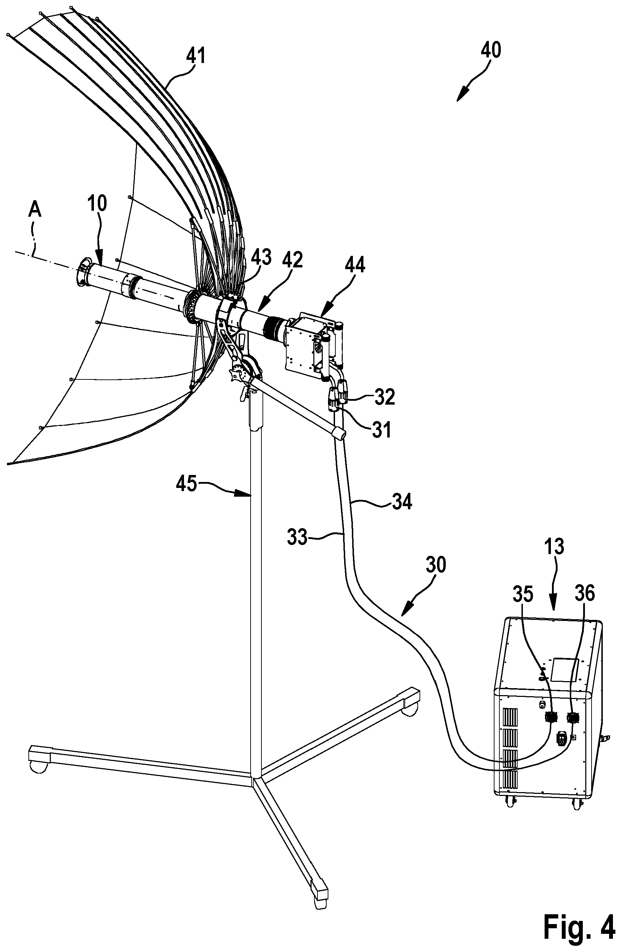

Die Beleuchtungseinrichtung 30 ist insbesondere im Zusammenhang mit einer Reflektoranordnung 40 einsetzbar, die zum Bereitstellen einer Beleuchtung für Fotoaufnahmen und Filmaufnahmen ausgebildet und eingerichtet ist. Die Reflektoranordnung 40 ist durch einen Reflektorschirm 41, eine Beleuchtungseinrichtung 30 nach einem oder mehreren der Ansprüche 9 bis 13, sowie ein Trägerelement 42 zur Aufnahme mindestens von Teilen der Beleuchtungseinrichtung 30 gekennzeichnet. In der Ausführungsform gemäß Figur 4 ist die Leuchteneinheit 10 an einem freien Ende des Trägerelementes 42 angeordnet.

Das Trägerelement 42 selbst ist im Bereich einer Schirmhalterung 43 mit dem Reflektorschirm 41 verbunden. An dem der Leuchteneinheit 10 entgegengesetzten Ende des Trägerelementes 42 treten die Anschlussstecker 31, 32 heraus. In dem Kopfbereich 44 kann z.B. auch das Vorschaltgerät für den HMI-Brenner 15 angeordnet sein. Auch können Zündgeräte und/oder Zündspulen für den HMI-Brenner 15 und die Blitzröhren 16, 19 in dem Kopfbereich 44 angeordnet sein. Die aus Reflektorschirm 41 und Trägerelement 42 gebildete Einheit ist gemäß Ausführungsform an einem Stativ 45 befestigt. In anderen Optionen kann die Einheit auch an anderen Stützelementen befestigt sein.

Vorzugsweise ist die Leuchteneinheit 10 - wie erwähnt - an einem freien Ende des Trägerelementes 42 angeordnet, wobei das Trägerelement 42 als Fokussiereinheit für die Leuchteneinheit 10 axial in Längsrichtung der Mittelachse A der Fokussiereinheit bzw. des Reflektorschirms 41 relativ zu diesem verschiebbar ist.

## Patentansprüche

1. Leuchteneinheit (10), ausgebildet und eingerichtet zum Beleuchten von Motiven für Fotoaufnahmen und Filmaufnahmen, mit einem Anschlusskörper (11), der einerseits Steckplätze aufweist, die zum Aufnehmen von mindestens zwei Leuchtmitteln ausgebildet und eingerichtet sind, und andererseits Kontakte (12) aufweist, die zum Anschließen an einen Generator (13) ausgebildet und eingerichtet sind, wobei die Kontakte (12) elektrisch mit den Steckplätzen verbunden sind, mindestens zwei in die Steckplätze eingesteckten Leuchtmitteln, sowie einer im Wesentlichen transparenten Schutzglocke (14), die mit dem Anschlusskörper (11) verbunden ist und jedes mit dem Anschlusskörper (11) verbundene Leuchtmittel mindestens teilweise umschließt, **gekennzeichnet dadurch dass** ein Leuchtmittel als HMI-Brenner (15) und das mindestens eine weitere Leuchtmittel als Blitzröhre (16) ausgebildet ist, wobei zusätzlich zum HMI-Brenner (15) mindestens zwei Blitzröhren (16, 19) innerhalb der Schutzglocke (14) angeordnet und elektrisch mit den Kontakten (12) verbunden in den Anschlusskörper (11) eingesteckt sind, wobei jeder Blitzröhre (16, 19) eine Zündspule zugeordnet ist.

2. Leuchteneinheit (10) nach Anspruch 1, **dadurch gekennzeichnet, dass** dem HMI-Brenner (15) ein Zündgerät sowie ein Vorschaltgerät zugeordnet sind und der Blitzröhre (16) eine Zündspule zugeordnet ist.

3. Leuchteneinheit (10) nach Anspruch 1, **dadurch gekennzeichnet, dass** der HMI-Brenner (15) zentral innerhalb der Schutzglocke (14) und die mindestens zwei Blitzröhren (16, 19) symmetrisch zum HMI-Brenner (15) angeordnet sind.

4. Leuchteneinheit (10) nach einem oder mehreren der Ansprüche 1 bis 3, **dadurch gekennzeichnet, dass** die Schutzglocke (14) lösbar am Anschlusskörper (11) befestigt und zylinderförmig ausgebildet ist, wobei an einer Stirnseite (21) der Schutzglocke (14) der Anschlusskörper (11) angeordnet ist und an der dem Anschlusskörper (11) gegenüberliegenden Stirnseite (22) eine luftdurchlässig ausgebildete Schutzkappe (23) angeordnet ist.

5. Leuchteneinheit (10) nach einem oder mehreren der Ansprüche 1 bis 4, **dadurch gekennzeichnet, dass** die Schutzglocke (14) aus Glas hergestellt ist, wobei das Glas mindestens teilweise mit einem UV-Filter versehen ist.

6. Leuchteneinheit (10) nach einem oder mehreren der Ansprüche 1 bis 5, **dadurch gekennzeichnet, dass** alle Leuchtmittel eine Farbtemperatur von etwa 5600 Kelvin aufweisen.

7. Leuchteneinheit (10) nach einem oder mehreren der Ansprüche 1 bis 6, **dadurch gekennzeichnet, dass** der Anschlusskörper (11) auf der den Leuchtmitteln abgewandten Seite 18-polig ausgebildet ist.

8. Beleuchtungseinrichtung (30), ausgebildet und eingerichtet zum Beleuchten von Motiven für Fotoaufnahmen und Filmaufnahmen, mit einer Leuchteneinheit (10), ausgebildet und eingerichtet zum Beleuchten von Motiven für Fotoaufnahmen und Filmaufnahmen, mit einem Anschlusskörper (11), der einerseits Steckplätze aufweist, die zum Aufnehmen von mindestens zwei Leuchtmitteln ausgebildet und eingerichtet sind, und andererseits Kontakte (12) aufweist, die zum Anschließen an einen Generator (13) ausgebildet und eingerichtet sind, wobei die Kontakte (12) elektrisch mit den Steckplätzen verbunden sind, mindestens zwei in die Steckplätze eingesteckten Leuchtmitteln, sowie einer im Wesentlichen transparenten Schutzglocke (14), die mit dem Anschlusskörper (11) verbunden ist und jedes mit dem Anschlusskörper (11) verbundene Leuchtmittel mindestens teilweise umschließt, **gekennzeichnet dadurch dass** ein Leuchtmittel als HMI-Brenner (15) und das mindestens eine weitere Leuchtmittel als Blitzröhre (16) ausgebildet ist, sowie durch eine gemeinsame Energiequelle, die zum wahlweisen Betreiben und/oder Zünden von HMI-Brenner (14) und/oder Blitzröhren (15, 16) ausgebildet und eingerichtet ist.

9. Beleuchtungseinrichtung nach Anspruch 8, **dadurch gekennzeichnet, dass** dem HMI-Brenner (15) ein Zündgerät sowie ein Vorschaltgerät zugeordnet sind und der Blitzröhre (16) eine Zündspule zugeordnet ist.

10. Beleuchtungseinrichtung nach Anspruch 8 oder 9, **dadurch gekennzeichnet, dass** zusätzlich zum HMI-Brenner (15) mindestens zwei Blitzröhren (16, 19) innerhalb der Schutzglocke (14) angeordnet und elektrisch mit den Kontakten (12) verbunden in den Anschlusskörper (11) eingesteckt sind, wobei jeder Blitzröhre (16, 19) eine Zündspule zugeordnet ist

11. Beleuchtungseinrichtung nach einem oder mehreren der Ansprüche 8 bis 10, **dadurch gekennzeichnet, dass** die Leuchteneinheit (10) nach einem oder mehreren der Ansprüche 3 bis 7 ausgebildet ist.

12. Beleuchtungseinrichtung (30) nach einem oder mehreren der Ansprüche 8 bis 11, **dadurch gekennzeichnet, dass** die Energiequelle ein Generator (13) ist, der ein Vorschaltgerät umfasst, das zur Begrenzung der Stromaufnahme des HMI-Brenners (15) ausgebildet und eingerichtet ist.

13. Beleuchtungseinrichtung (30) nach einem oder mehreren der Ansprüche 8 bis 12, **dadurch gekennzeichnet, dass** sie weiterhin eine Steuerungseinrichtung umfasst, die zum individuellen Ansteuern der Leuchtmittel der Leuchteneinheit (10) ausgebildet und eingerichtet ist.

14. Beleuchtungseinrichtung (30) nach Anspruch 12 oder 13, **dadurch gekennzeichnet, dass** der Generator (13) eine Detektionseinrichtung umfasst, die zum Erkennen der angeschlossenen Leuchtmittel der Leuchteinheit (10) ausgebildet und eingerichtet ist.

15. Beleuchtungseinrichtung (30) nach einem oder mehreren der Ansprüche 12 bis 14, **dadurch gekennzeichnet, dass** der Generator (13) zum Erzeugen kurzer Abbrennzeiten der Blitzröhren (16, 19) ausgebildet und eingerichtet ist, derart, dass mit jeder Blitzröhre (16, 19) Blitze zum Aufnehmen von 60 bis 120 Bildern pro Sekunde erzeugbar sind.

16. Reflektoranordnung (40), ausgebildet und eingerichtet zum Bereitstellen einer Beleuchtung für Fotoaufnahmen und Filmaufnahmen, **gekennzeichnet** d u r c h einen Reflektorschirm (41), eine Beleuchtungseinrichtung (30) nach einem oder mehreren der Ansprüche 8 bis 15, sowie ein Trägerelement (42) zur Aufnahme mindestens von Teilen der Beleuchtungseinrichtung (30).

17. Reflektoranordnung (40) nach Anspruch 16, **dadurch gekennzeichnet, dass** die Leuchteneinheit (10) an einem freien Ende des Trägerelementes (42) angeordnet ist, wobei das Trägerelement (42) als Fokussiereinheit für die Leuchteneinheit (10) axial in Längsrichtung der Mittelachse (A) der Fokussiereinheit bzw. des Reflektorschirms (41) relativ zu diesem verschiebbar ist.

## Claims

1. Lighting unit (10), designed and configured for illuminating subjects for photography and filming, comprising a connecting element (11) that comprises: on the one hand, receptacles designed and configured to receive at least two light sources, and, on the other hand, contacts (12) designed and configured to be connected to a power pack (13), the contacts (12) being electrically connected to the receptacles; at least two light sources inserted into the receptacles; and a substantially transparent protective cover (14) which is connected to the connecting element (11) and at least partially encloses each of the light sources connected to the connecting element (11), **characterised in that** one light source being designed as an HMI light (15) and the at least one other light source being designed as a flash tube (16), wherein in addition to the HMI light (15) at least two flash tubes (16, 19) disposed inside the protective cover (14) are electrically connected to the contacts (12) and inserted into the connecting element (11), an ignition coil being assigned to each flash tube (16, 19).

2. Lighting unit (10) according to claim 1, **characterised in that** an igniter and a ballast are assigned to the HMI light (15) and an ignition coil is assigned to the flash tube (16).

3. Lighting unit (10) according to claim 1, **characterised in that** the HMI light (15) is disposed centrally within the protective cover (14) and the at least two flash tubes (16, 19) are disposed symmetrically relative to the HMI light (15).

4. Lighting unit (10) according to one or more of claims 1 to 3, **characterised in that** the protective cover (14) is detachably mounted on the connecting element (11) and is cylindrical in shape, the connecting element (11) being disposed at one end (21) of the protective cover (14) and an air-permeable protective cap (23) being disposed at the opposite end (22) to the connecting element (11).

5. Lighting unit (10) according to one or more of claims 1 to 4, **characterised in that** the protective cover (14) is made of glass, the glass being at least partially provided with a UV filter.

6. Lighting unit (10) according to one or more of claims 1 to 5, **characterised in that** all light sources have a colour temperature of approximately 5600 Kelvin.

7. Lighting unit (10) according to one or more of claims 1 to 6, **characterised in that** the connecting element (11) is designed with 18 terminals on the side facing away from the light sources.

8. Lighting device (30), designed and configured to illuminate subjects for photography and filming, comprising a lighting unit (10), designed and configured for illuminating subjects for photography and filming, which lighting unit is **characterised by** a connecting element (11) that comprises: on the one hand, receptacles designed and configured to receive at least two light sources, and, on the other hand, contacts (12) designed and configured to be connected to a power pack (13), the contacts (12) being electrically connected to the receptacles; at least two light sources inserted into the receptacles; and a substantially transparent protective cover (14) which is connected to the connecting element (11) and at least partially encloses each of the light sources connected to the connecting element (11), **characterised in that** one light source being designed as an HMI light (15) and the at least one other light source being designed as a flash tube (16), , and by a common power source designed and configured to selectively operate and/or ignite an HMI light (14 ) and/or flash tubes (15, 16).

9. Lighting kit according to claim 8, **characterised in that** an igniter and a ballast are assigned to the HMI light (15) and an ignition coil is assigned to the flash tube (16).

10. Lighting kit according to claim 8 or 9, **characterised in that** in addition to the HMI light (15) at least two flash tubes (16, 19) disposed inside the protective cover (14) are electrically connected to the contacts (12) and inserted into the connecting element (11), an ignition coil being assigned to each flash tube (16, 19).

11. Lighting kit according to one or more of claims 8 to 10, **characterised in that** the lighting unit (10) is designed according to one or more of claims 3 to 7

12. Lighting kit (30) according to one or more of claims 8 to 11, **characterised in that** the energy source is a power pack (13) comprising a ballast designed and configured to limit the current input to the HMI light (15).

13. Lighting kit (30) according to one or more of claims 8 to 12, **characterised in that** it further comprises a control device which is designed and configured to individually actuate the light sources of the lighting unit (10).

14. Lighting kit (30) according to claim 12 or 13, **characterised in that** the power pack (13) further comprises a detection device designed and configured to detect the connected light sources of the lighting unit (10).

15. Lighting kit (30) according to one or more of claims 12 to 14, **characterised in that** the power pack (13) is designed and configured to generate short flash durations with the flash tubes (16, 19), such that flashes for capturing 60 to 120 images per second can be generated with each flash tube (16, 19).

16. Reflector assembly (40) designed and configured to provide illumination for photography and filming, **characterised by** a reflector umbrella (41), a lighting kit (30) according to one or more of claims 9 to 13, and a carrier element (42) for receiving at least parts of the lighting kit (30).

17. Reflector assembly (40) according to claim 14, **characterised in that** the lighting unit (10) is disposed at a free end of the carrier element (42), wherein the carrier element (42), as a focusing unit for the lighting unit (10), is axially movable in the longitudinal direction of the centre axis (A) of the focusing unit or of the reflector umbrella (41) relative to the latter.

## Revendications

1. Unité d'éclairage (10), configurée et adaptée pour éclairer des sujets pour des prises de vues photographiques et des prises de vues cinématographiques, avec un corps de raccordement (11) qui présente d'une part des emplacements d'enfichage qui sont configurés et adaptés pour recevoir au moins deux moyens d'éclairage et d'autre part des contacts (12) qui sont configurés et adaptés pour être raccordés à un générateur (13), les contacts (12) étant reliés électriquement aux emplacements d'enfichage, au moins deux moyens d'éclairage enfichés dans les emplacements d'enfichage, ainsi qu'une cloche de protection (14) essentiellement transparente, qui est reliée au corps de raccordement (11) et qui entoure au moins partiellement chaque moyen d'éclairage relié au corps de raccordement (11), **caractérisé en ce qu'**un moyen d'éclairage est configuré sous forme de lampe HMI (15) et l'au moins un autre moyen d'éclairage est configuré sous forme de tube à éclairs (16), en plus de la lampe HMI (15), au moins deux tubes à éclairs (16, 19) étant agencés à l'intérieur de la cloche de protection (14) et étant enfichés dans le corps de raccordement (11) en étant reliés électriquement aux contacts (12), une bobine d'allumage étant associée à chaque tube à éclairs (16, 19).

2. Unité d'éclairage (10) selon la revendication 1, **caractérisée en ce qu'**un appareil d'allumage ainsi qu'un ballast sont associés à la lampe HMI (15) et une bobine d'allumage est associée au tube à éclairs (16).

3. Unité d'éclairage (10) selon la revendication 1, **caractérisée en ce que** la lampe HMI (15) est agencée au centre à l'intérieur de la cloche de protection (14) et les au moins deux tubes à éclairs (16, 19) sont agencés symétriquement par rapport à la lampe HMI (15).

4. Unité d'éclairage (10) selon une ou plusieurs des revendications 1 à 3, **caractérisée en ce que** la cloche de protection (14) est fixée de manière amovible au corps de raccordement (11) et est configurée sous forme cylindrique, le corps de raccordement (11) étant agencé sur un côté frontal (21) de la cloche de protection (14) et un capuchon de protection (23) configuré sous forme perméable à l'air étant agencé sur le côté frontal (22) opposé au corps de raccordement (11).

5. Unité d'éclairage (10) selon une ou plusieurs des revendications 1 à 4, **caractérisée en ce que** la cloche de protection (14) est fabriquée en verre, le verre étant au moins partiellement pourvu d'un filtre UV.

6. Unité d'éclairage (10) selon une ou plusieurs des revendications 1 à 5, **caractérisée en ce que** tous les moyens d'éclairage présentent une température de couleur d'environ 5 600 Kelvin.

7. Unité d'éclairage (10) selon une ou plusieurs des revendications 1 à 6, **caractérisée en ce que** le corps de raccordement (11) est configuré à 18 pôles sur le côté détourné des moyens d'éclairage.

8. Dispositif d'éclairage (30), configuré et adapté pour éclairer des sujets pour des prises de vues photographiques et des prises de vues cinématographiques, avec une unité d'éclairage (10), configurée et adaptée pour éclairer des sujets pour des prises de vues photographiques et des prises de vues cinématographiques, avec un corps de raccordement (11) qui présente d'une part des emplacements d'enfichage qui sont configurés et adaptés pour recevoir au moins deux moyens d'éclairage, et d'autre part des contacts (12) qui sont configurés et adaptés pour être raccordés à un générateur (13), les contacts (12) étant reliés électriquement aux emplacements d'enfichage, au moins deux moyens d'éclairage enfichés dans les emplacements d'enfichage ainsi qu'une cloche de protection (14) essentiellement transparente, qui est reliée au corps de raccordement (11) et qui entoure au moins partiellement chaque moyen d'éclairage relié au corps de raccordement (11), **caractérisé en ce qu'**un moyen d'éclairage est configuré sous forme de lampe HMI (15) et l'au moins un autre moyen d'éclairage est configuré sous forme de tube à éclairs (16), ainsi que par une source d'énergie commune, qui est configurée et adaptée pour faire fonctionner et/ou allumer au choix la lampe HMI (14) et/ou les tubes à éclairs (15, 16).

9. Dispositif d'éclairage selon la revendication 8, **caractérisé en ce qu'**un appareil d'allumage ainsi qu'un ballast sont associés à la lampe HMI (15) et une bobine d'allumage est associée au tube à éclairs (16).

10. Dispositif d'éclairage selon la revendication 8 ou 9, **caractérisé en ce qu'**en plus de la lampe HMI (15), au moins deux tubes à éclairs (16, 19) sont agencés à l'intérieur de la cloche de protection (14) et sont enfichés dans le corps de raccordement (11) en étant reliés électriquement aux contacts (12), une bobine d'allumage étant associée à chaque tube à éclairs (16, 19).

11. Dispositif d'éclairage selon une ou plusieurs des revendications 8 à 10, **caractérisé en ce que** l'unité d'éclairage (10) est configurée selon une ou plusieurs des revendications 3 à 7.

12. Dispositif d'éclairage (30) selon une ou plusieurs des revendications 8 à 11, **caractérisé en ce que** la source d'énergie est un générateur (13) comprenant un ballast qui est configuré et adapté pour limiter la consommation de courant de la lampe HMI (15).

13. Dispositif d'éclairage (30) selon une ou plusieurs des revendications 8 à 12, **caractérisé en ce qu'**il comprend en outre un dispositif de commande qui est configuré et adapté pour commander individuellement les moyens d'éclairage de l'unité d'éclairage (10).

14. Dispositif d'éclairage (30) selon la revendication 12 ou 13, **caractérisé en ce que** le générateur (13) comprend un dispositif de détection qui est configuré et adapté pour reconnaître les moyens d'éclairage raccordés de l'unité d'éclairage (10).

15. Dispositif d'éclairage (30) selon une ou plusieurs des revendications 12 à 14, **caractérisé en ce que** le générateur (13) est configuré et adapté pour produire des temps de combustion courts des tubes à éclairs (16, 19), de telle sorte que des éclairs peuvent être produits avec chaque tube à éclairs (16, 19) pour prendre de 60 à 120 images par seconde.

16. Agencement réflecteur (40), configuré et adapté pour fournir un éclairage pour des prises de vues photographiques et des prises de vues cinématographiques, **caractérisé par** un écran réflecteur (41), un dispositif d'éclairage (30) selon une ou plusieurs des revendications 8 à 15, ainsi qu'un élément de support (42) pour recevoir au moins des parties du dispositif d'éclairage (30).

17. Agencement réflecteur (40) selon la revendication 16, **caractérisé en ce que** l'unité d'éclairage (10) est agencée à une extrémité libre de l'élément de support (42), l'élément de support (42) pouvant être déplacé axialement dans la direction longitudinale de l'axe central (A) de l'unité de focalisation ou de l'écran réflecteur (41) par rapport à celui-ci, en tant qu'unité de focalisation pour l'unité d'éclairage (10).
